# NEUE EUROPÄISCHE PATENTSCHRIFT

(11) **EP 0 216 202 B2**
(45) Veröffentlichungstag und Bekanntmachung des Hinweises auf die Entscheidung über den Einspruch: **08.03.1995**
(45) Hinweis auf die Patenterteilung: 25.09.1991
(21) Anmeldenummer: 86112073.1
(22) Anmeldetag: 11.11.1981
(51) Int. Cl.: H02K 29/08

(54) **Elektromotor**
Electric motor
Moteur électrique

(30) Priorität: 11.11.1980 DE 8030107 U
(43) Veröffentlichungstag der Anmeldung: 01.04.1987
(62) Teilanmeldung aus: 81109634.6
(73) Patentinhaber: Magnet-Motor Gesellschaft für magnetmotorische Technik mbH, D-82319 Starnberg (DE)
(72) Erfinder: Heidelberg, Götz, Dipl. Phys., D-8136 Percha (DE)
(74) Vertreter: Klunker . Schmitt-Nilson . Hirsch

(56) Entgegenhaltungen:
- BE-A- 867 436
- DE-A- 2 030 663
- DE-A- 2 638 971
- DE-A- 2 748 543
- DE-A- 2 850 478
- DE-B- 1 613 005
- DE-B- 2 132 479
- DE-B- 2 612 464
- Fachbuch von Dr.-Ing. Carl Heck: "Magnetische Werkstoffe und ihre technische Anwendung" 2. Auflage, 1975, Seiten 265-277,285,325-327

## Beschreibung

Die Erfindung bezieht sich auf einen bürstenlosen Gleichstrommotor gemäß Oberbegriff des Anspruchs 1 oder 2.

Ein solcher bürstenloser Gleichstrommotor ist aus der DE-A-2 748 543 bekannt. Bei dem bekannten Gleichstrommotor geht es um die Lösung der Aufgabe, eine sehr geringe Bauhöhe in Axialrichtung des Motors zu ermöglichen, wobei der Motor einen vergleichsweise hohen Wirkungsgrad haben soll. In einer Ausführungsform des bekannten Gleichstrommotors sind sechs Statorpole vorgesehen, denen jeweils eine Wicklung zugeordnet ist. Die Wicklungen sind in zwei Gruppen unterteilt. Mit Hilfe von elektronischen Schaltmitteln läßt sich erreichen, daß verschiedenen Statorpolen zugeordnete Wicklungen wahlweise in Reihe oder parallel geschaltet werden können. So lassen sich zum Beispiel die einem ersten und einem zweiten Statorpol zugeordneten Wicklungen (erste Wicklung und zweite Wicklung) zueinander in Reihe schalten oder zueinander parallelschalten.

Ein ähnlicher Motor ist aus DE-A-1613005 bekannt.

Demgegenüber liegt der vorliegenden Erfindung die Aufgabe zugrunde, ein Motor der eingangs genannten Art zu schaffen, der sich durch gute Regelbarkeit und hohen Wirkungsgrad auszeichnet. Gelöst wird diese Aufgabe durch die im Anspruch 1 und die im Anspruch 2 angegebene Erfindung. Vorteilhafte Ausgestaltungen der Erfindung sind in den Unteransprüchen angegeben.

Gemäß dem ersten Aspekt der Erfindung können die jeweils einem Statorpol zugeordneten Stromleiter wahlweise in Reihe oder parallel geschaltet werden. Nach dem zweiten Aspekt der Erfindung ist von den jeweils einem Statorpol zugeordneten mehreren Stromleitern eine Teilmenge wahlweise einschaltbar. Danach wird die gute Regelbarkeit also erzielt, indem man abhängig vom Bedarf ein, zwei oder mehrere Stromleiter, die zu einem Statorpol gehören. einschaltet, während die übrigen Stromleiter ausgeschaltet bleiben.

Der erfindungsgemäße Gleichstrommotor benötigt keine verschleißgefährdeten und störungsanfälligen Schleifkontakte und keinen Kollektor, weil die jeweils zeitgerechte Einschaltung der einzelnen Stromleiter auf elektronische Weise erfolgt. Die mögliche unterschiedliche Polteilung von Stator und Läufer erbringt die Vorteile eines sicheren Motoranlaufs, eines gleichmäßigen Motorlaufs und einer gleichmäßigen Netzbelastung, wobei diese unterschiedliche Polteilung erst infolge der zeitgerechten elektronischen Einschaltung der Stromleiter problemlos für die Praxis verfügbar wird. Die Auslegung mit im wesentlichen gleicher Anzahl von Statorpolen und Dauermagnetpolen, die sogenannte einphasige Auslegung, läßt eine optimal hohe Anzahl von Dauermagneten am Läuferumfang zu; infolgedesssen können die magnetischen Rückschlußwege sowohl am Läufer zwischen den Dauermagneten als auch am Stator zwischen den Statorpolen mit geringerem Querschnitt ausgeführt werden, wodurch an Motorgewicht gespart wird.

Wenn die Dauermagnete radial außerhalb der Statorpole angeordnet sind, rückt die eigentliche Wirkfläche des Elektromotors, nämlich der Ringspalt zwischen den Dauermagneten und den Statorpolen, radial weiter nach außen, weil die Dauermagnete im allgemeinen radial weniger Platz benötigen als die Statorpole mit den Stromleitern bzw. Wicklungen. Dies führt zur Möglichkeit der Unterbringung einer gemessen am Bauvolumen besonders hohen Anzahl von Dauermagnetpolen und Statorpolen sowie zu einem größeren Hebelarm der in der Wirkfläche herrschenden Kräfte relativ zur Drehachse des Motors. Außerdem werden die Dauermagnete durch die Fliehkraft nach außen gegen ihre Anbringungsfläche gedrückt, was ihre Befestigung vereinfacht. Der erfindungsgemäße Motor weist ein hohes Verhältnis von Leistung bzw. Drehmoment zu Gewicht bzw. Bauvolumen auf.

Vorzugsweise sind die Stromleiter in Form von Spulen bzw. Wicklungen vorgesehen.

Nach dem Prinzip der Erfindung kann auch ein Generator aufgebaut werden.

Die verwendeten Begriffe "Stator" und "Läufer" sollen nicht bedeuten, daß der Stator unbedingt der unbewegt bleibende Teil des Elektromotors und der Läufer unbedingt der sich bewegende Teil des Elektromotors ist. Vielmehr sind beide Möglichkeiten, also sich bewegender Stator mit unbewegt bleibendem Läufer und unbewegt bleibender Stator mit sich bewegendem Läufer, ausführbar, sogar die Möglichkeit, daß sich sowohl Stator als auch Läufer mit unterschiedlicher Geschwindigkeit bewegen. Der Fall des unbewegt bleibenden Stators ist jedoch bevorzugt, da diesem Strom zugeführt werden muß.

Bei der Erfindung werden bevorzugt hochkoerzitive Dauermagnete aus einer Legierung eines Elements aus der Gruppe der seltenen Erden, insbesondere Samarium, mit Kobalt eingesetzt. Solche Magnete erlauben es, mit vergleichsweise großen Spaltweiten zu arbeiten. Sie zeichnen sich ferner durch eine praktisch gerade Kennlinie im vierten Quadranten aus, wodurch sie gegen Spaltweitenänderungen und Gegenfelder, beispielsweise durch Elektromagnete, relativ unempfindlich sind.

Bevorzugte Merkmale hinsichtlich des Aufbaus und insbesondere der elektronischen Steuerung des Elektromotors gehen aus der am gleichen Tage eingereichten europäischen Patentanmeldung 81 109 637.9 hervor, deren Gesamtinhalt durch ausdrückliche Bezugnahme zum Teil der Offenbarung der vorliegenden Anmeldung gemacht wird.

Als Sensoren sind Hallgeneratoren besonders bevorzugt, da diese konstruktiv bequem auf die Magnetfelder der Dauermagnete ansprechend angeordnet werden können. Es sind aber auch andere Sensoren einsetzbar, beispielsweise Reedkontakte, Photozellen, Ultraschallsensoren, Gasstromsensoren, Induktionssensoren oder Permeabilitätssensoren.

Man kann pro Stromleiter bzw. Spule bzw. pro Statorpol einen eigenen Sensor und eine eigene Schalteinrichtung vorsehen. Dabei müssen von der jeweiligen Schalteinrichtung nur vergleichsweise geringe Ströme bzw. Leistungen bewältigt werden, wodurch deren Preis ganz wesentlich überproportional sinkt. Damit einher geht die Verringerung des Kühlaufwandes für die Schalteinrichtungen, die Erhöhung der Redundanz bzw. Zuverlässigkeit, da der Ausfall einzelner Schalteinrichtungen die Gesamtfunktion nicht wesentlich stört, und eine Vereinfachung der Wartung durch Austausch vergleichsweise billiger einzelner Schalteinrichtungen. Schließlich kommt man auch insgesamt in einen niedrigeren Spannungsbereich, da die Gegen-EMK pro geschaltetem Stromleiter klein bleibt und man sich in einer vom Isolationsaufwand und damit vom Preisaufwand her günstigen VDE-Klasse halten kann. Andererseits ist es jedoch durchaus möglich und dann, wenn die vorstehenden Gesichtspunkte nicht so stark zu Buche schlagen, günstig, mit einem Sensor bzw. einer Schalteinrichtung mehrere Stromleiter bzw. Spulen mehrerer Statorpole, die sich in mindestens im wesentlichen gleicher Relativstellung zu Dauermagnetpolen befinden, zu schalten. Dabei kann es sich um eine Gruppe benachbarter Statorpole handeln, die trotz der geschilderten unterschiedlichen Polteilung von Stator und Läufer noch eine im wesentlichen gleiche Relativstellung zu Dauermagnetpolen haben. Vorzugsweise handelt es sich jedoch um das gleichzeitige Schalten von Stromleitern eines Paars von sich diametral gegenüberliegenden Statorpolen bei einem Stator mit einer geraden Anzahl von Statorpolen. Es ist auch möglich, die zugleich zu schaltenden Stromleiter bzw. Spulen verschiedener Statorpole wahlweise in Reihe oder parallel zu schalten.

In den Ansprüchen und in der vorstehenden Beschreibung ist durchgehend von einem Einschalten der Stromleiter bzw. Spulen gesprochen worden. Diese Ausdrucksweise soll das nachfolgende, zeitgerechte, elektronische Ausschalten der Stromleiter bzw. Spulen mit umfassen.

Die einphasige Auslegung, also das Vorsehen eines Statorpols im wesentlichen pro Dauermagnetpol, hat den weiteren Vorteil, daß unter sich gleiche Spulen bzw. Wicklungen eingesetzt werden können, die sich nicht gegenseitig überlappen bzw. überkreuzen, so daß keine Platz benötigenden Wickelköpfe entstehen. Das ermöglicht eine Serienfertigung der Spulen bzw. Wicklungen und erleichtert ihre Austauschbarkeit.

Die Erfindung wird im folgenden anhand schematisch dargestellter Ausführungsbeispiele noch näher erläutert. Es zeigen:
- Fig. 1 bis 4: grundsätzliche Konfigurationen eines Elektromotors;
- Fig. 5: einen Querschnitt durch einen Elektromotor.

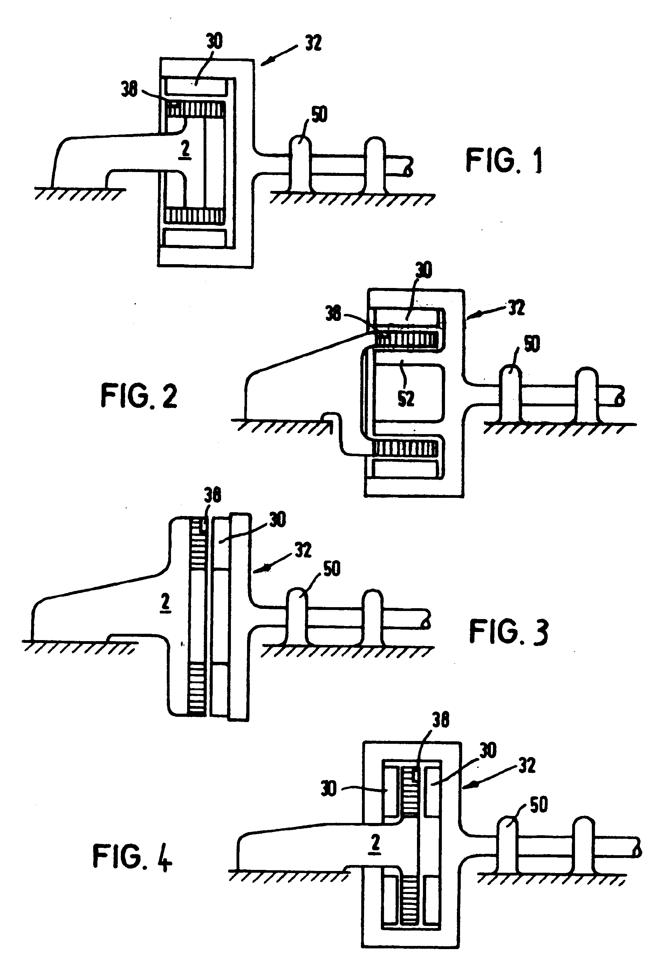

In den Figuren 1 bis 4 sind einige grundsätzliche Konfigurationen von Elektromotoren dargestellt. Der in diesen Figuren rechte Teil des jeweiligen Elektromotors ist jeweils mit Lagern 50 drehbar gelagert und bildet den Läufer. Bei der Ausführungsform nach Fig. 1 ist der eigentliche Läuferbereich im wesentlichen becherförmig, wobei am Innenumfang des Bechers ringförmig Dauermagnete mit wechselnder Polung ringförmig verteilt sind. Der Stator 2 hat die Form einer Walze, die am Außenumfang lamelliert ist, wobei die einzelnen Lamellen axial aneinandergepackt sind. Der Stator 2 trägt am Außenumfang axial verlaufende und zeichnerisch nicht dargestellte Stromleiter in geeigneter Teilung. Der Bereich des Läufers 32, an dem die Dauermagnete 30 befestigt sind, besteht aus ferromagnetischem Material als Rückschlußweg. Die Stromleiter können beispielsweise in axial verlaufenden Nuten des Stators eingelegt sein.

Der Stator 2 trägt am Außenumfang ringförmig verteilt mehrere Hallsonden 38, die mit den Dauermagneten 30 zusammenwirken. Sobald hallsondenseitig festgestellt wird, daß sich ein läuferseitiger Teil und ein statorseitiger Teil eines magnetischen Kreises oder mehrerer magnetischer Kreise in antriebsgerechter Relativlage befinden, wird der Stromleiter bzw. die Spule oder werden die Stromleiter bzw. die Spulen dieses Kreises bzw. dieser Kreise selbsttätig eingeschaltet.

Die Ausführungsform nach Fig. 2 unterscheidet sich von der Ausführungsform nach Fig. 1 dadurch, daß der radial innerhalb des Ringes der Dauermagnete 30 angeordnete Statorbereich becherförmig hineinragt und daß radial innerhalb dieses Statorbereichs ein ringförmiger Vorsprung 52 des Läufers 32 unter Einhaltung eines geringen Luftspalts zum Statorring vorgesehen ist. Auf diese Weise ist der vorher auf den Stator 2 entfallende Teil der magnetischen Kreise hauptsächlich auf den Ringvorsprung 52 verlagert, der mit gleicher Drehzahl wie die Dauermagnete 30 rotiert. Auf diese Weise lassen sich die Wirbelstromverluste reduzieren. Der radial zwischen den Dauermagneten 30 und dem Ringvorsprung 52 befindliche Statorbereich kann auch in Form von sogenannten Luftstromleitern bzw. Luftspulen oder in Form von Stromleitern bzw. Spulen, deren Zwischenräume unter Freilassung der am Außenumfang und am Innenumfang liegenden Leiteroberflächen mit einer ferromagnetisches Pulver enthaltenden Vergußmasse gefüllt sind, ausgebildet sein.

Die Ausführungsform nach Fig. 3 unterscheidet sich von der Ausführungsform nach Fig. 1 dadurch, daß der Läufer 32 als Scheibe ausgebildet ist und daß die Dauermagneten axial auf der den Lagern 50 abgewandten Stirnseite der Schreibe ringförmig verteilt angeordnet sind. Auch der Stator 2 ist scheibenförmig und trägt das Lamellenpaket und die nicht dargestellten Stromleiter auf seiner dem Läufer 32 zugewandten Stirnseite. Die einzelnen in Umfangsrichtung verlaufenden Lamellen des Lamellenpakets sind radial einander benachbart.

Die Ausführungsform nach Fig. 4 unterscheidet sich von der Ausführungsform nach Fig. 3 dadurch, daß der Läufer 32 zwei am Außenumfang miteinander verbundene Scheiben aufweist, zwischen denen sich der als Scheibe ausgebildete Stator befindet. Auf der den Lagern 50 abgewandten Scheibe des Läufers 32 kann entweder ein mitrotierender, magnetischer Rückschluß nach dem Prinzip der Ausführungsform gemäß Fig. 2 vorgesehen sein, oder es kann, wie zeichnerisch dargestellt, dort eine Reihe ringförmig verteilter Dauermagnete 30 stirnseitig angebracht sein. Im letzteren Fall wirkt also die Statorscheibe auf beiden Stirnseiten mit Dauermagneten 30 zusammen, so daß sich ein Ausgleich der axial wirkenden, magnetischen Anziehungskräfte ergibt. Die Ausführungsform gemäß Fig. 4 kann durch Hinzufügung weiterer Statorscheiben und Läuferscheiben erweitert werden. Der Statorbereich zwischen den beiden mit Dauermagneten 30 bestückten Läuferscheiben kann, wie bei der Ausführungsform nach Fig. 2 beschrieben, mit Luftstromleitern bzw. Luftspulen oder Vergußmasse gefüllten Leitern bzw. Spulen verwirklicht sein.

Bei den Ausführungsformen nach Fig. 1 bis 4 sind die Mittenabstände der Stromleiter des Stators 2 bzw. die Mittenabstände von Statorpolen und die Mittenabstände der Dauermagnete 30, jeweils in Umfangsrichtung, im wesentlichen aufeinander abgestimmt, wobei allerdings eine leicht unterschiedliche Teilung am Stator und am Läufer zur Vermeidung des sogenannten Nuteffekts vorgesehen sein kann.

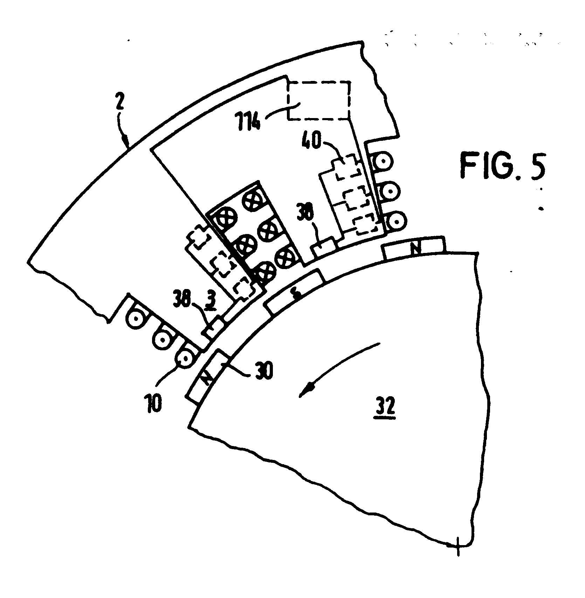

In Fig. 5 ist ein Elektromotor dargestellt, der nach dem in Fig. 1 beschriebenen Grundprinzip, allerdings mit radial innerhalb des Stators angeordnetem Läufer, aufgebaut ist. Analog kann man aber auch entsprechend dem Grundprinzip von Fig. 1 den Stator innerhalb des Läufers anordnen, wodurch der Ringspalt zwischen Stator und Läufer weiter nach außen rückt und die Dauermagnete durch die Fliehkraft gegen ihrer Anbringungsfläche gedrückt werden.

Der insgesamt zylindrische Stator 2 besteht aus einem axial zusammengefügten Paket von - grob gesprochen - ringförmigen Blechen aus ferromagnetischem Material. Der Stator 2 weist über den Innenumfang verteilt nach innen ragende Statorpole bzw. Statorzähne 3 auf. Jeder Statorzahn 3 weist radial aufeinanderfolgend drei Spulen 10 auf. Jede Spule 10 besteht aus zwei Axialästen und zwei stirnseitigen, die Axialäste verbindenden Ästen. Jede Spule ist aus mehreren, voneinander isolierten Drähten gewickelt, in Fig. 5 jedoch als einziger, dicker Draht dargestellt.

Der innerhalb des Stators 2 rotierende Läufer 31 trägt an seinem Außenumfang ringförmig verteilt ein Reihe von in geradzahliger Anzahl vorgesehenen Dauermagneten 30 wechselnder Polung, die sich axial erstrecken. Aus weiter unten noch deutlicher werdenden Gründen sind die untereinander gleichen Abstände der Statorzähne 3, gemessen in Umfangsrichtung von Mitte zu Mitte, derart kleiner oder größer als die analog gemessenen Mittenabstände der Dauermagneten 30, daß ein oder zwei Polzähne 3 mehr oder weniger als Dauermagnete vorhanden sind.

An jedem Polzahn 3 ist eine auf die Dauermagneten 30, und zwar sowohl auf Nordpole als auch auf Südpole, ansprechende Hallsonde 38 vorgesehen. Stellt die Hallsonde 38 eine antriebsgerechte Relativstellung zwischen einem Dauermagneten 30 und dem dieser Hallsonde 38 zugeordneten Statorzahn 3 fest, werden eine, zwei oder alle drei Spulen 10 dieses Statorzahns 3 mittels der mit 40 angedeuteten Schalteinrichtungen eingeschaltet. Mit einem Steuerteil 114 kann Einfluß darauf genommen werden, ob alle drei Spulen 10 des betreffenden Statorzahns 3 eingeschaltet werden oder nur zwei Spulen 10 oder nur eine Spule 10. Wird dem Motor ein hohes Drehmoment abverlangt, werden alle drei Spulen 10 eingeschaltet, bei niedrigerem verlangten Drehmoment weniger Spulen 10. Die Steuereinheit kann zusätzlich die Funktion haben, die einzelnen Spulen 10 jedes Statorzahns 3 von Parallelschaltung in Reihenschaltung umzuschalten und umgekehrt. Dies kann auch bei der weiter unten beschriebenen Möglichkeit der gleichzeitigen Schaltung mehrerer Spulen an unterschiedlichen Umfangsstellen geschehen. Die Reihenschaltung empfiehlt sich bei kleiner Drehzahl und hohem Drehmoment, die Parallelschaltung bei hoher Drehzahl und kleinem Drehmoment.

Die Spulen 10 jedes Statorzahns 3 jeweils über eine eigene Schalteinrichtung 40 einzuschalten kann zum einen aus Gründen der Verkleinerung der Schaltleistung geschehen, was die in der Beschreibungseinleitung genannten Vorteile erbringt. Zum anderen ergeben sich zusammen mit der leicht unterschiedlichen Polteilung von Stator 2 und Läufer 32 die Vorteile eines sicheren Anlaufs, eines gleichmäßigeren Motorlaufs und einer gleichmäßigeren Netzbelastung.

Die Spulen 10 jedes Statorzahns 3 werden, je nachdem ob sich ein Nordpol eines Dauermagneten 30 oder ein Südpol eines Dauermagneten 30 gegenüber dem Statorzahn befindet, mit unterschiedlicher Stromrichtung eingeschaltet. Dies wird von den Schalteinrichtungen 40 gesteuert.

In praxi sind beim Betrieb immer Spulen 10 mehrerer benachbarter Statorzähne 3 eingeschaltet. Wenn die Polteilungsdifferenz zwischen Stator 2 und Läufer 32 relativ gering ist, sind zur gleichen Zeit sogar Spulen 10 nahezu aller Statorzähne eingeschaltet. Die Spulen von in Umfangsrichtung benachbarten Statorzähnen 3 sind mit entgegengesetzter Stromrichtung beaufschlagt, wie in Fig. 5 angedeutet.

Bei der Ausführungsform gemäß Fig. 5 ist die sogenannte einphasige Auslegung verwirklicht: Wenn zwei in Umfangsrichtung benachbarte Dauermagnete 30 zwei Statorzähnen 3 gegenüberstehen, befindet sich zwischen diesen beiden Statorzähnen 3 kein weiterer Statorzahn. Aufgrund der einphasigen Auslegung gibt es keine sogenannte Wickelköpfe an den axialen Stirnseiten des Stators 2, an denen sich bei mehrphasiger Auslegung die Stromleiter der verschiedenen Phasen kreuzen würden. Vielmehr können die Spulen 10 unter sich gleich ausgebildet sein und auf die Statorzähne 3 aufgesteckt werden, oder es können die unter sich gleichen, mit Spulen 10 versehenden Statorzähne 3 in den Stator einzeln einqesetzt werden.

Wenn man über den Umfang zwei Statorzähne 3 mehr hat als Dauermagnetpole, dann tritt eine identische Relativstellung von Dauermagnetpolen und Statorzahnpolen immer gleichzeitig an zwei Stellen des Umfangs des Motors auf. Man kann die Spulen dieser beiden Stellen mit einer einzigen Schalteinrichtung 40 zugleich schalten. Analoges gilt für größere Differenzen in der Zahl der Statorzähne 3 und der Dauermagneten 30.

Statt einer einzigen Hallsonde 38, die sowohl auf magnetische Nordpole als auch auf magnetische Südpole anspricht, kann man auch axial nebeneinander zwei Hallsonden vorsehen, von denen die eine nur auf Nordpole anspricht und die andere nur auf Südpole.

## Patentansprüche

1. Bürstenloser Gleichstrommotor,
mit einem Stator (2), der ringförmig verteilte und mit jeweils mehreren Stromleitern (10) versehene Statorpole (3) darbietet, mit einem Läufer (32), der mit ringförmig verteilten und mit den Statorpolen (3) zusammenwirkenden Dauermagneten (30) versehen ist,
mit mindestens einem Sensor (38), der die Relativstellung von Stator (2) und Läufer erfaßt (32),
und mit einer sensorgesteuerten, elektronischen Einrichtung zum antriebsgerechten Schalten der Statorpol-Stromleiter (10) in Abhängigkeit von der Stator-Läufer-Relativstellung,
dadurch gekennzeichnet,
daß die jeweils einem ausgeprägten Statorpol (3) zugeordneten Stromleiter (10) wahlweise in Reihenschaltung oder in Parallelschaltung schaltbar sind, und daß die Einrichtung zum Schalten der Statorpol-Stromleiter mehrere sensorgesteuerte elektrische Schalteinrichtungen (40) aufweist, die jeweils eine Teilanzahl der Statorpole (3) individuell schalten.

2. Bürstenloser Gleichstrommotor,
mit einem Stator (2), der ringförmig verteilte und mit jeweils meheren Stromleitern (10) versehene Statorpole (3) darbietet, mit einem Läufer (32), der mit ringförmig verteilten und mit den Statorpolen (3) zusammenwirkenden Dauermagneten (30) versehen ist,
mit mindestens einem Sensor (38), der die Relativstellung von Stator (2) und Läufer erfaßt (32),
und mit einer sensorgesteuerten, elektronischen Einrichtung zum antriebsgerechten Schalten der Statorpol-Stromleiter (10) in Abhängigkeit von der Stator-Läufer-Relativstellung,
dadurch gekennzeichnet,
daß von den jeweils einem ausgeprägten Statorpol (3) zugeordneten Stromleitern (10) eine Teilmenge, z.B. zwei von drei Stromleitern (10), wahlweise einschaltbar ist, und daß die Einrichtung zum Schalten der Statorpol-Stromleiter mehrere sensorgesteuerte elektrische Schalteinrichtungen (40) aufweist, die jeweils eine Teilanzahl der Statorpole (3) individuell schalten.

3. Gleichstrommotor nach Anspruch 1 oder 2,
dadurch gekennzeichnet,
daß sich der Mittenabstand benachbarter Dauermagnetpole (30) von dem Mittenabstand benachbarter Statorpole (3) unterscheidet.

4. Gleichstrommotor nach Anspruch 3,
dadurch gekennzeichnet,
daß sich die Anzahl der Statorpole (3) und die Anzahl der Dauermagnete um 1 oder 2 unterscheiden.

5. Gleichstrommotor nach einem der Ansprüche 1 bis 4,
dadurch gekennzeichnet,
daß jeweils ein Paar von sich diametral gegenüberliegenden Statorpolen (3) geschaltet wird.

6. Gleichstrommotor nach einem der Ansprüche 1 bis 5,
dadurch gekennzeichnet,
daß als Sensoren (38) Hallgeneratoren vorgesehen sind.

7. Gleichstromotoren nach einem der Ansprüche 1 bis 6,
dadurch gekennzeichnet,
daß Dauermagnete (30) aus einer Legierung auf der Basis seltener Erden, insbesondere Samarium, mit Kobalt vorgesehen sind.

8. Gleichstrommotor nach einem der Ansprüche 1 bis 7
dadurch gekennzeichnet,
daß die Stromleiterwicklungen (10) der Statorpole (3) untereinander gleich ausgebildet sind.

9. Gleichstrommotor nach einem der Ansprüche 1 bis 8.
dadurch gekennzeichnet,
daß der Stator (2) mit Statorzähnen ausgebildet ist, die in mit Stromleiterwicklungen (10) versehenen Zustand in den Stator (2) eingesetzt sind.

10. Gleichstrommotor nach einem der Ansprüche 1 bis 9
dadurch gekennzeichnet,
daß die Dauermagnete radial außerhalb der Statorpole (3) angeordnet sind.

11. Gleichstrommotor nach Anspruch 10,
dadurch gekennzeichnet,
daß der Läufer (32) becherförmig ausgebildet ist und die Dauermagnete (30) am Innenumfang des Läufers (32) befestigt sind.

## Claims

1. A brushless DC motor,
comprising a stator (2) presenting annularly distributed stator poles (3) provided with a plurality of current conductors (10) each, a rotor (32) provided with annularly distributed permanent magnets (30) cooperating with the stator poles (3),
at least one sensor (38) sensing the relative position of stator (2) and rotor (32),
and a sensor-controlled electronic means for drive-effective switching of the stator pole current conductors (10) depending on the relative position of stator and rotor,
characterized in that
the current conductors (10) associated with a respective salient stator pole (3) are selectively switchable either in series connection or in parallel connection, and that the means for switching of the stator pole current conductors comprises a plurality of sensor-controlled electric switching means (40), each for individually switching a partial number of stator poles (3).

2. A brushless DC motor,
comprising a stator (2) presenting annularly distributed stator poles (3) provided with a plurality of current conductors (10) each, a rotor (32) provided with annularly distributed permanent magnets (30) cooperating with the stator poles (3),
at least one sensor (38) sensing the relative position of stator (2) and rotor (32),
and a sensor-controlled electronic means for drive-effective switching of the stator pole current conductors (10) depending on the relative position of stator and rotor,
characterized in that
of the current conductors (10) associated with a respective salient stator pole (3), a partial quantity, e.g. two out of three current conductors (10), is adapted to be selectively switched on, and that the means for switching of the stator pole current conductors comprises a plurality of sensor-controlled electric switching means (40), each for individually switching a partial number of stator poles (3).

3. A DC motor according to claim 1 or 2,
characterized in that
the centre-to-centre spacing between adjacent permanent magnet poles (30) is different from the centr-to-centre spacing between adjacent stator poles (3).

4. A DC motor according to claim 3,
characterized in that
the number of stator poles (3) and the number of the permanent magnet poles differ by 1 or 2.

5. A DC motor according to any one of claims 1 to 4,
characterized in that
a pair of diametrically opposed stator poles (3) is switched each.

6. A DC motor according to any one of claims 1 to 5,
characterized in that
Hall generators are provided as sensors (38).

7. A DC motors according to any one of claims 1 to 6,
characterized in that
permanent magnets (30) are provided consisting of an alloy based on rare earths, in particular samarium, and cobalt.

8. A DC motor according to any one of claims 1 to 7,
characterized in that
the current conductor coils (10) of the stator poles (3) are of mutually identical design.

9. A DC motor according to any one of claims 1 to 8,
characterized in that
the stator (2) is formed with stator teeth which are inserted in the stator (2) in their condition provided with current conductor coils (10).

10. A DC motor according to any one of claims 1 to 9,
characterized in that
the permanent magnet poles are disposed radially outside of the stator poles (3).

11. A DC motor according to claim 10,
characterized in that
the rotor (32) is chup-shaped and the permanent magnets (30) are secured to the inner circumference of the rotor (32).

## Revendications

1. Moteur électrique à courant continu sans balai, avec un stator (2), qui présente des pôles statoriques (3), distribués de façon annulaire et pourvus chacun de plusieurs conducteurs électriques (10), avec un rotor (32), pourvu d'aimants permanents (30) distribués de façon annulaire et qui coopèrent avec les pôles statoriques (3), avec au moins un capteur (38), qui mesure la position relative du stator (2) et du rotor (32), et avec un dispositif électronique, commandé par capteur, pour assurer la connexion des conducteurs électriques (10) de pôles statoriques pour l'entraînement, en fonction de la position relative stator-rotor, caractérisé en ce que les conducteurs électriques (10) associés à chaque pôle statorique matricés (3) peuvent être connectés au choix en série ou en parallèle et que le dispositif de commutation des conducteurs de pôles statoriques comporte plusieurs dispositifs de connexion électriques (40), commandés par capteurs, qui assurant chaque fois la connexion individuelle d'une partie des pôles statoriques (3).

2. Moteur électrique à courant continu sans balai selon la revendication 1, avec un stator (2), qui présente des pôles statoriques (3), distribués de façon annulaire et pourvus chacun de plusieurs conducteurs électriques (10), avec un rotor (32), pourvu d'aimants permanents (30) distribués de façon annulaire et qui coopèrent avec les pôles statoriques (3), avec au moins un capteur (38), qui mesure la position relative du stator (2) et du rotor (32), et avec un dispositif électronique, commandé par capteur, pour assurer la connexion des conducteurs électriques (10) de pôles statoriques pour l'entraînement, en fonction de la position relative stator-rotor, caractérisé en ce que parmi les conducteurs électriques (10) associés à chaque pôle statorique matricé (3), une partie d'entre eux, au choix par exemple deux conducteurs électriques (10) sur trois, peut être mise en circuit et que le dispositif de commutation des conducteurs de pôles statoriques comporte plusieurs dispositifs de connexion électriques (40), commandés par capteur, qui assurant chaque fois la connexion individuelle d'une partie des pôles statoriques (3).

3. Moteur électrique à courant continu selon la revendication 1 ou 2, caractérisé en ce que l'écart entre les centres de pôles à aimant permanent (30) voisins se distingue de l'écart entre les centres de pôles statoriques (3) voisins.

4. Moteur électrique à courant continu selon la revendication 3, caractérisé en ce que le nombre des pôles statoriques (3) et le nombre d'aimants parmanents est différent, la différence étant de 1 ou de 2.

5. Moteur électrique à courant continu selon l'une des revendications 1 à 4, caractérisé en ce que chaque fois un couple de pôles statoriques (3) diamétralement opposés est commutés.

6. Moteur électrique à courant continu selon l'une des revendications 1 à 5, caractérisé en ce que les capteurs (38) prévus sont des générateurs à effet Hall.

7. Moteur électrique à courant continu selon l'une des revendications 1 à 6, caractérisé en ce que les aimants permanents (30) prévus sont en alliage à base de terres rares, en particulier de samarium, avec du cobalt.

8. Moteur électrique à courant continu selon l'une des revendications 1 à 7, caractérisé en ce que les enroulements de conducteurs électrique (10) des pôles statoriques (3) sont identiques entre eux.

9. Moteur électrique à courant continu selon l'une des revendications 1 à 8, caractérisé en ce que le stator (2) est réalisé avec des dents statoriques, qui sont insérées dans le stator (2) à l'état où l'on a disposé les enroulements de conducteurs électriques (10).

10. Moteur électrique à courant continu selon l'une des revendications 1 à 9, caractérisé en ce que les aimants permanents sont disposés radialement à l'extérieur du pôle statorique (3).

11. Moteur électrique à courant continu selon la revendication 10, caractérisé en ce que le rotor (32) est en forme de godet et les aimants permanents (30) sont fixés sur la périphérie intérieure du rotor (32).
